(19) Europäisches Patentamt
European Patent Office
Office européen des brevets

(11) EP 2 618 405 A2

(12) EUROPEAN PATENT APPLICATION

(43) Date of publication:
24.07.2013 Bulletin 2013/30

(21) Application number: 13150537.2

(22) Date of filing: 08.01.2013

(51) Int Cl.:
H01M 4/131 (2010.01) H01M 4/485 (2010.01)
H01M 4/505 (2010.01) H01M 4/58 (2010.01)
H01M 10/052 (2010.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 17.01.2012 US 201261587505 P
27.07.2012 US 201213560954

(71) Applicants:
- Samsung SDI Co., Ltd.
Yongin-si, Gyeonggi-do (KR)
- Robert Bosch GmbH
70442 Stuttgart (DE)

(72) Inventors:
- Kim, Seung-Mo
Yongin-si, Gyeonggi-do (KR)
- Jeoung, Jun-Sik
Yongin-si, Gyeonggi-do (KR)

(74) Representative: Gulde Hengelhaupt Ziebig & Schneider
Patentanwälte - Rechtsanwälte
Wallstraße 58/59
10179 Berlin (DE)

(54) **Positive active material for rechargeable lithium battery and rechargeable lithium battery including the same**

(57) The invention relates to a positive active material (10, 20) for a rechargeable lithium battery as well as to a rechargeable lithium battery including the positive active material. The material comprises:
a core (11, 21) comprising a lithium composite metal oxide selected from the group consisting of compounds represented by the following Chemical Formula 1, Chemical Formula 2, and combinations thereof,

$$Li_xMO_2 \quad (1)$$

wherein M is one or more metal element, and $1 \leq x \leq 1.1$,

$$y\ Li_2MnO_3 .\ (1-y)\ LiM'O_2 \quad (2)$$

wherein M' is one or more metal element, $0 < y < 1$; and
a shell (13, 23) covering the core (11, 21), the shell comprising lithium iron phosphate ($LiFePO_4$), wherein the shell (13, 23) is present in an amount in a range of 5 to 15 wt% based on the total weight of the positive active material.

FIG. 1B

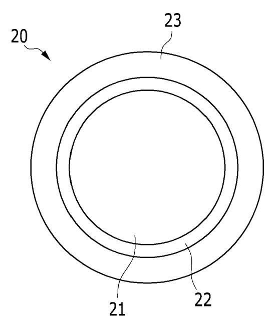


EP 2 618 405 A2

## Description

## BACKGROUND OF THE INVENTION

### (a) Field of the Invention

A positive active material for a rechargeable battery and a rechargeable lithium battery including the same are disclosed.

### (b) Description of the Related Art

Recently, the power source substituting for the internal combustion engine has drawn attentions since taking a growing concern in the environmental contamination. The electric vehicle and hybrid electric vehicle may be considered as environmental-friendly technology satisfying the requirements since using electricity as a power source. However, the battery technology for saving the electric energy should be preceded in order to commercialize the electric vehicle.
The rechargeable lithium battery, which is an energy storage device having high energy and power, is accelerated to be developed due to the excellent merits of high capacity and driving voltage compared to other batteries. However, due to the high energy, the battery safety is deteriorated and worried for the explosion, fire or the like. Particularly, in the case of electric vehicle using only electric power source, a positive material having a high energy density is used in order to improve the driving distance, so the stability is weakened. Accordingly, the development of positive active material having improved driving distance and safety is the most considerable matter in the battery development for automobile vehicle.
In the case of positive material having a high energy density, the more lithium is extracted from the positive electrode during the charge and intercalated into the negative electrode, so the positive electrode becomes structurally unstable causing the internal and external short and the thermal runaway when the overcharge or the heat exposure, and the worries for exploding or firing a battery are increased.
Olivine is the most common material in the earth, which is cheap and has a good structural stability. Although lithium iron phosphate ($LiFePO_4$) having olivine structure, which has been used for a rechargeable lithium battery, has merits of safety and cost aspects, it has relatively low voltage, capacity and cycle-life characteristics, so it is not widely applied to a positive electrode material for an electric automobile.
In addition, the lithium iron phosphate has an average particle diameter (D50) of 0.2 μm, which is a nanoparticle size, causing drawbacks of the wide specific surface area and the serious moisturization.

## SUMMARY OF THE INVENTION

One embodiment of the present invention provides a positive active material for a rechargeable lithium battery having a high-capacity, an excellent thermal stability, and excellent cycle characteristics at room temperature and at high temperatures, and a stable cycle-life characteristic after being exposed to high temperatures. In particular, the positive active material according to the present invention exhibits remarkably low exothermic heat generation when exposed to thermal stress due to a suppression of the reaction with the electrolyte. In thisway, the thermal stability as well as the safety characteristic of the battery is enhanced. A further embodiment of the present invention provides a rechargeable lithium battery including the same.
Despite its aforementioned drawbacks, the small particle size and the structural stability of lithium iron phosphate are preferable for applying it as shell material of a core-shell structure. In addition, lithium iron phosphate used for a shell material may prevent the dramatically exothermic heat, and thus improves the thermal stability of a positive active material. The positive active materials according to an embodiment of the present invention include lithium iron phosphate.
The positive active material for a rechargeable lithium battery according to the invention comprises:

a core comprising a lithium composite metal oxide selected from the group consisting of compounds represented by the following Chemical Formula 1, Chemical Formula 2, and combinations thereof,

$$Li_xMO_2 \qquad (1)$$

wherein M is one or more metal element, and $1 \leq x \leq 1.1$,

$$y\ Li_2MnO_3 \cdot (1-y)\ LiM'O_2 \qquad (2)$$

wherein M' is one or more metal element, $0 < y < 1$; and

a shell covering the core, the shell comprising lithium iron phosphate ($LiFePO_4$), wherein the shell is present in an amount in a range of 5 to 15 wt% based on the total weight of the positive active material.

According to a preferred embodiment the shell is present in an amount in a range of 10 to 15 wt% based on the total weight of the positive active material.

Preferably, M in Chemical Formula 1 and M' in Chemical Formula 2 are independently selected from the group consisting of Ni, Co, Mn, Mg, Fe, Cu, Zn, Cr, Ag, Ca, Na, K, In, Ga, Ge, V, Mo, Nb, Si, Ti, and Zr. More preferably, M and M' are independently selected from transition metals.

According to particularly preferred embodiments, M and M' in Chemical Formula 1 and 2, respectively, are independently a metal composite compound selected from the group consisting of $Ni_aCo_b$ ($0<a<1$, $0<b<1$, $a+b=1$), $Co_aMn_b$ ($0<a<1$, $0<b<1$, $a+b=1$), $Ni_aMn_b$ ($0<a<1$, $0<b<1$, $a+b=1$), $Ni_aCo_bMn_c$ ($0<a<1$,$0<b<1$,$0<c<1$, $a+b+c=1$), and $Ni_aCo_bAl_c$ ($0<a<1$, $0<b<1$, $0<c<1$, $a+b+c=1$).

It is even more preferred that in Chemical Formula 1 and 2, M and M' are independently $Ni_aCo_bMn_c$ with $0.3\leq a\leq 0.8$, $0.1\leq b\leq 0.5$, $0.1\leq c\leq 0.5$, and $a+b+c=1$.

According to a further embodiment of the invention, $Li_2MnO_3$ in Chemical Formula 2 has a layered structure.

In Chemical Formula 2, $Li_2MnO_3$ may be doped with one or more element(s) selected from the group consisting of Al, Ga, Ge, Mg, Nb, Zn, Cd, Ti, Co, Ni, K, Na, Ca, Si, Fe, Cu, Sn, V, B, P, Se, Bi, As, Zr, Mn, Cr, Sr, V, Sc, Y, and a rare earth element.

It is further preferred that the lithium composite metal oxide included in the core has an average particle diameter in the range from 6 to 20 μm, particularly in the range from 10 to 15 μm.

Preferably, the lithium iron phosphate included in the shell has an average particle diameter in the range from 0.2 to 1 μm, particularly in the range from 0.2 to 0.5 μm.

It is further preferred that the shell has a thickness in the range from 0.5 to 1.5 μm, particularly in the range from 0.8 to 1 μm.

The shell may further comprise a carbon-based material, preferably in the range from 0.5 to 5 wt%, more particularly from 1 to 3 wt%, based on the total weight of the positive active material. The carbon-based material included in the shell may be selected from the group consisting of activated carbon, carbon black (including ketjen black and denka black), acetylene black, vapor grown carbon fibers (VGCF), carbon nanotubes, and combinations thereof. Preferably, the carbon-based material may have an average particle diameter in the range from 20 to 60 μm, particularly from 30 to 40 μm

According to a further embodiment of the invention, the positive active material further includes an intermediate shell located between the core and the shell. The intermediate shell may comprise at least one metal oxide doped on or coated on the core (21). The metal oxide included in the intermediate is preferably selected from the group consisting of $ZrO_2$, $Al_2O_3$, MgO, $TiO_2$, and a combination thereof.

A further aspect of the present invention is directed to a rechargeable lithium battery comprising:

a positive electrode comprising a positive active material according to the present invention;
a negative electrode comprising a negative active material and facing the positive electrode; and
an electrolyte between the positive electrode and the negative electrode.

The negative active material may include a material that reversibly intercalates/deintercalates lithium ions, a lithium metal, a lithium metal alloy, a material being capable of doping and dedoping lithium, transition metal oxide, and a combination thereof.

The organic solvent may be selected from dimethyl carbonate (DMC), diethyl carbonate (DEC), dipropyl carbonate (DPC), methylpropyl carbonate (MPC), ethylpropyl carbonate (EPC), methylethyl carbonate (MEC), methyl propionate (MP), ethyl propionate (EP), ethylene carbonate (EC), propylene carbonate (PC), butylene carbonate (BC), and a combination thereof.

The lithium salt may be selected from $LiPF_6$, $LiBF_4$, $LiBF_6$, $LiSbF_6$, $LiAsF_6$, $LiC_4F_9SO_3$, $LiClO_4$, $LiAlO_2$, $LiAlCl_4$, $LiN(C_xF_{2x+1}SO_2)(C_yF_{2y+1}SO_2)$ (where, x and y are natural numbers), LiCl, LiI, $LiB(C_2O_4)_2$, and a combination thereof.

The electrolyte may further include phosphazenes and derivatives thereof.

The electrolyte may include phosphazenes and derivatives thereof in an amount of 5 to 10 volume% based on the total amount of the electrolyte.

The electrolyte may further include a fluoro-substituted ether-based organic solvent, a fluoro-substituted carbonate-based organic solvent, or a combination thereof.

The electrolyte may include fluoro-substituted ether-based organic solvent, fluoro-substituted carbonate-based organic solvent, or a combination thereof at an amount of 5 to 50 volume% based on the total amount of the electrolyte.

The positive active material for a rechargeable lithium battery according to one embodiment has an excellent thermal stability even in the event of an overcharge or of an internal short.

## BRIEF DESCRIPTION OF THE DRAWINGS

FIG. 1A is a schematic cross-sectional view of the positive active material according to one embodiment of the present invention.

FIG. 1B is a schematic cross-sectional view of the positive active material according to another embodiment of the present invention.

FIG. 2 is an exploded perspective view of a rechargeable lithium battery according to one embodiment of the present invention.

FIG. 3 is a SEM image of the positive active material prepared in Preparation Example 3.

FIG. 4 shows differential scanning calorimetry (DSC) curves of positive active materials according to Preparation Example 1 and Comparative Preparation Example 4.

FIG. 5 shows DSC curves of positive active materials according to Preparation Example 2 and Comparative Preparation Example 5.

FIG. 6 shows DSC curves of positive active materials according to Preparation Example 3 and Comparative Preparation Example 1.

FIG. 7 shows DSC curves of positive active materials according to Preparation Example 4 to Comparative Preparation Example 1.

FIG. 8 shows DSC curves in Preparation Examples 5 to 7.

FIG. 9 is a graph showing the heat abuse evaluation for the lithium rechargeable battery cell according to Example 3 by using an accelerating rate calorimeter (ARC).

FIG. 10 is a graph showing the heat abuse evaluation for the lithium rechargeable battery cell according to Comparative Example 1 by using ARC.

FIG. 11 is a graph illustrating the Heat-Wait-Seek evaluation for the positive active materials according to Example 3 and Comparative Example 1 by using ARC.

FIG. 12 is a graph showing overcharge evaluation for the rechargeable lithium battery cell according to Example 3.

FIG. 13 is a graph showing the overcharge evaluation for the rechargeable lithium battery cell according to Example 6.

FIG. 14 is a graph showing the overcharge evaluation for the rechargeable lithium battery cell according to Comparative Example 1.

## DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways.

In the drawings, the thickness of layers, films, panels, regions, etc., are exaggerated for clarity.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

According to one embodiment of the present invention, the positive active material for a rechargeable lithium battery has a core-shell structure including a core and a shell, specifically a core including a lithium composite metal oxide selected from a compound represented by the following Chemical Formula 1, Chemical Formula 2, or a combination thereof; and a shell including lithium iron phosphate ($LiFePO_4$), wherein the lithium iron phosphate is included in an amount of about 5 to about 15 wt% based on the total amount of the positive active material.

[Chemical Formula 1] $Li_xMO_2$

(wherein, in the above Chemical Formula, M is one or more metal elements, and $1 \leq x \leq 1.1$)

[Chemical Formula 2] $yLi_2MnO_3 \cdot (1-y)LiM'O_2$

(wherein, in the above Chemical Formula, M' is one or more metal elements, and $0 \leq y \leq 1$)

In Chemical Formula 1, the M is one or more metal elements, for example one or more metal selected from Ni, Co, Mn, Mg, Fe, Cu, Zn, Cr, Ag, Ca, Na, K, In, Ga, Ge, V, Mo, Nb, Si, Ti, and Zr.

The M may be a metal composite represented by $Ni_aCo_b$ (0<a<1, 0<b<1, a+b=1), $Co_aMn_b$ (0<a<1, 0<b<1, a+b=1), $Ni_aMn_b$ (0<a<1, 0<b<1, a+b=1), $Ni_aCo_bMn_c$ (0<a<1,0<b<1,0<c<1, a+b+c=1), $Ni_aCo_bAl_c$ (0<a<1, 0<b<1, 0<c<1, a+b+c=1), and the like. More particularly, the M may be Ni, $Ni_{0.3}Co_{0.3}Mn_{0.3}$, $Ni_{0.4}Co_{0.3}Mn_{0.3}$, $Ni_{0.5}Co_{0.2}Mn_{0.3}$,

$Ni_{0.8}Co_{0.1}Mn_{0.1}$, $Ni_{0.75}Co_{0.1}Mn_{0.15}$, $Ni_{0.6}Co_{0.2}Mn_{0.2}$, $Ni_{0.8}Co_{0.15}Al_{0.05}$, or the like.

In Chemical Formula 1, x is in the range of about 1 to about 1.1. When x is more than 1, a lithium metal composite oxide represented by the above Chemical Formula 1 includes excessive lithium. The lithium metal composite oxide represented by the above Chemical Formula 1 may be represented by, for example, $Li_{1.02}Ni_{0.5}Co_{0.2}Mn_{0.3}O_2$, $Li_{1.08}Ni_{0.5}Co_{0.2}Mn_{0.3}O_2$, $Li_{1.1}Ni_{0.5}Co_{0.2}Mn_{0.3}O_2$, $Li_{1.1}Ni_{0.08}Co_{0.15}Al_{0.05}$, and the like.

The lithium metal composite oxide represented by the above Chemical Formula 2 may be a solid solution where $Li_2MnO_3$ and $LiM'O_2$ exist in a solid solution state. When the lithium metal composite oxide form a solid solution, the chemical stability of Mn in $Li_2MnO_3$ is improved so that Mn is inhibited from being eluted and degraded during repeating charge and discharge. Ultimately, the capacity deterioration is prevented.

In the lithium composite metal oxide of Chemical Formula 2, y representing for the composition ratio of the solid components $Li_2MnO_3$ and $LiM'O_2$ may vary continuously in the range between 0 and 1. y may range, for example, from 0.1 to 0.5.

In Chemical Formula 2, M' is one or more metal elements, for example one or more metal selected from Ni, Co, Mn, Mg, Fe, Cu, Zn, Cr, Ag, Ca, Na, K, In, Ga, Ge, V, Mo, Nb, Si, Ti, and Zr. In particular, M' may be a transition metal selected from the aforementioned group. The M' may be a metal composite compound represented by $Ni_aCo_b$ ($0<a<1$, $0<b<1$, $a+b=1$), $Co_aMn_b$ ($0<a<1$, $0<b<1$, $a+b=1$), $Ni_aMn_b$ ($0<a<1$, $0<b<1$, $a+b=1$), $Ni_aCo_bMn_c$ ($0<a<1,0<b<1,0<c<1$, $a+b+c=1$), $Ni_aCo_bAl_c$ ($0<a<1$, $0<b<1$, $0<c<1$, $a+b+c=1$), and the like. More particularly, the M' may be represented by $Ni_{0.5}Co_{0.2}Mn_{0.3}$, $Ni_{0.8}Co_{0.1}Mn_{0.1}$, $Ni_{0.3}Co_{0.3}Mn_{0.3}$, $Ni_{0.6}Co_{0.2}Mn_{0.2}$, $Ni_{0.08}Co_{0.15}Al_{0.05}$, and the like.

In addition, $Li_2MnO_3$, which is a component for a lithium composite metal oxide in Chemical Formula 2, may have a layered structure; and Mn component in $Li_2MnO_3$ may be doped with other metal atoms. In one embodiment, Mn in $Li_2MnO_3$ may be doped with an element selected from the group consisting of Al, Ga, Ge, Mg, Nb, Zn, Cd, Ti, Co, Ni, K, Na, Ca, Si, Fe, Cu, Sn, V, B, P, Se, Bi, As, Zr, Mn, Cr, Sr, V, Sc, Y, a rare earth element, and a combination thereof. When the Mn component is doped with another element, the interlayer migration of the Mn component is suppressed, so that more lithium may be intercalated/deintercalated. Resultantly, the electric characteristics such as capacity characteristic or the like are improved.

The lithium composite metal oxide according to Chemical Formula 1 or 2 included in the core may have an average particle diameter of about 6 to about 20 $\mu$m, for example, about 10 to about 15 $\mu$m. In addition, the lithium iron phosphate may have an average particle diameter of about 0.2 to about 1 $\mu$m, for example, about 0.2 to about 0.5 $\mu$m. When the lithium composite metal oxide has the average particle diameter within the aforementioned rangeand the lithium iron phosphate has an average particle diameter within the aforementioned range, the lithium iron phosphate may have an excellent coating property to the surface of lithium composite metal oxide forming the core. On the other hand, when the lithium composite metal oxide is smaller than about 6 $\mu$m, and when the lithium iron phosphate is larger than about 1 $\mu$m, the surface coating process for the composite metal oxide included in the core may have lower efficiency and poor reproducibility.

The positive active material having the core-shell structure may be manufactured by mechanically mixing lithium iron phosphate, and lithium composite metal oxide selected from the compounds represented by Chemical Formula 1, Chemical Formula 2 or a combination thereof. In this way, lithium iron phosphate is coated on the surface of the lithium composite metal oxide. The mechanical mixing process may be a dry coating method such as a mechanofusion method, and may be performed at about 8,000 to 1,2000 rpm for about 10 minutes to 120 minutes. On the other hand, when the surface of lithium composite metal oxide is coated with lithium iron phosphate, heat may be spontaneously generated due to the high-speed agitation. Thus, a separate heat treatment process is not required after the coating process. Accordingly, when the agitation speed and time are appropriately adjusted, the lithium composite metal oxide having a shell of lithium iron phosphate may be obtained with high reproducibility and efficiency without an additional heat treatment process. Unlike the conventional method, the method as described above does not require a separate heat treatment process, making it possible to shorten the processing time and decrease production costs.

FIG. 1A is a cross-sectional view showing the positive active material 10 according to one embodiment. The positive active material 10 has essentially a particulate structure, for instance in the from of spherical particles. The positive active material 10 includes a core 11 including a lithium composite metal oxide and a shell 13 surrounding the core 11 and including a lithium iron phosphate.

Since the positive active material having the core-shell structure includes the shell of the thermally very stable lithium iron phosphate, the lithium composite metal oxide included in the core is prevented from directly contacting to the electrolyte solution in the event of an overcharge, an internal short, an exposure to heat at high temperature or the like, so as to suppress the thermal runaway and combust of battery.

In addition, hydrogen fluoride (HF), which is a byproduct generated in the electrolyte, is suppressed to react with the core of lithium composite metal oxide, which substantially accounts for the battery's capacity. In this way, the cycle-life characteristic of the battery is improved. Furthermore, since the exothermic heat is proportionally increased with the increase of the specific capacity of the conventional positive active material, it is difficult to apply it in a high capacity battery such as a battery for electric vehicles. On the contrary, the positive active material having the core-shell

structure according to the invention ensures thermal stability due to the shell as well as high capacity (capable of including excessive amount of Ni) due to the lithium composite metal oxide included in the core.

In the core-shell structure, the shell is included in a range of 5 to 15 wt%, for example in a range of 7 to 15 wt%, more particularly in a range of 10 to 15 wt%, based on the total amount of the positive active material. The term 'total amount of the positive active material' refers to the total weight including the core and the shell. When the shell is included within the numeral range, the rechargeable lithium battery may have an excellent thermal stability, cycle-life characteristics and a high-capacity. However, when the amount of the shell being included exceeds 15 wt%, the capacity of the positive active material may be reduced. When the shell is included to less than 5 wt%, the reaction between the core and the electrolyte and thus the generation of exothermic heat are not sufficiently suppressed, so the thermal safety characteristics are not improved.

In addition, the shell may have a thickness of 0.5 to 1.5 μm, for example, 0.8 to 1 μm. When the content and the thickness of the shell satisfy these numeral ranges, the positive active material has excellent thermal safety characteristics since the surface of core of lithium composite metal oxide is sufficiently coated.

On the other hand, the shell including lithium iron phosphate may further include a carbon-based material.

The carbon-based material may be selected from activated carbon having high specific area, carbon black including ketjen black, or denka black, acetylene black, VGCF (vapor grown carbon fiber), carbon nanotube, and the like. When further including the carbon-based material in a shell, the electric conductivity of lithium iron phosphate may be improved, so the high rate characteristics and cycle characteristics of rechargeable lithium battery are improved.

The carbon-based material may be included in about 0.5 to about 5 wt%, for example 1 to 3 wt%, based on the total amount of the positive active material. In addition, when the carbon based material has a larger specific surface area, the positive active material may include a smaller amount of the carbon based material in order to achieve the aforementioned effects thereof. Therefore, it is preferable that the carbon-based material included in the shell has a larger specific surface area. Accordingly, the carbon-based material may have an average particle diameter of about 20 to 60 nm, for example, 30 to 40 nm. When the carbon-based material has the average particle diameter within the numeral range, the carbon-based material has excellent coating property to the surface of core of lithium composite metal oxide, and the conductivity of positive active material is improved.

According to another embodiment of the present invention, the positive active material includes a core including lithium composite metal oxide; an intermediate shell including a metal oxide doped or coated on the surface of the core, wherein the metal oxide may be selected from $ZrO_2$, $Al_2O_3$, MgO, $TiO_2$, and a combination thereof; and an outer shell including the lithium iron phosphate coated on the surface of the first shell. The positive active material of this embodiment may be obtained by dry-coating lithium iron phosphate on the core comprising the lithium composite metal oxide doped or coated with a metal oxide selected from $ZrO_2$, $Al_2O_3$, MgO, $TiO_2$, and a combination thereof.

Relating to this, FIG. 1B is a schematic cross-sectional view showing the positive active material 20 according to this embodiment. The positive active material 20 includes a first shell 22 (the intermediate shell) in which at least one metal oxide selected from $ZrO_2$, $Al_2O_3$, MgO, $TiO_2$, and a combination thereof is doped or coated on the core 21 including lithium composite metal oxide; and a second shell 23 in which lithium iron phosphate is coated on the surface of the first shell.

In order to prepare the first shell 22 including the metal oxide, a precursor comprising the metal of the metal oxide (22) is coated on the core (21) through a sorting process and then the resulting product is subjected to a heat treatment. Alternatively, a precursor of the core (21) may be mixed with a precursor of the metal oxide (22) and the resultant mixture may be burned to produce the first shell (22) on the core (21). The coating process may be performed according to any method as long as it does not adversely affect the physical properties of the core (e.g., spraying coating, dipping or the like) without limitation, which is well understood by a person skilled in the art, so the detailed description will be omitted.

As in above, the positive active material including the first (intermediate) shell and the second (outer) shell on the surface of lithium composite metal oxide, effectively suppresses the contact of the lithium composite metal oxide of the core with impurities such as hydrogen fluoride generated in the electrolyte solution during the charge and discharge. Thus, the capacity deterioration of rechargeable lithium battery is prevented.

According to yet another embodiment of the present invention, a rechargeable lithium battery includes a positive electrode including the positive active material of the present invention, a negative electrode including a negative active material, and an electrolyte including an organic solvent and a lithium salt.

The rechargeable lithium battery may be classified as a lithium ion battery, a lithium ion polymer battery, and a lithium polymer battery according to the presence of a separator and the kind of electrolyte used therein. The rechargeable lithium battery may have a variety of shapes and sizes and thus, may include a cylindrical, prismatic, coin-like, or pouch-type battery and a thin film type or a bulky type in size. The structure and fabricating method for a lithium ion battery pertaining to the present invention are well known in the art. The schematic structure of the rechargeable lithium battery of the present invention is illustrated in FIG. 2. As shown in FIG. 2, the rechargeable lithium battery 1 includes a battery case including a negative electrode 3, a positive electrode 2, and an electrolyte impregnated in a separator 4

interposed between the negative electrode 3 and the positive electrode 2, and a cap plate 6 sealing the battery case 5.

The positive electrode may include a current collector and a positive active material layer disposed on the current collector, and the current collector may include the positive active material on one side or both sides thereof. The positive active material is the same as described above.

The positive active material layer may include a binder and a conductive material.

The binder improves binding properties of the positive active material particles to each other and to a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of the positive electrode. Any electrically conductive material can be used as a conductive agent, unless it causes a chemical change. Examples of the conductive material include at least one selected from carbon-based materials, such as natural graphite, artificial graphite, carbon black, acetylene black, ketjen black, carbon nanotubes, a carbon fiber; and a metal powder, a metal fiber of copper, nickel, aluminum, silver, or the like, and a polyphenylene derivative..

The current collector may be aluminum (Al), but is not limited thereto.

The negative electrode includes a current collector and a negative active material layer disposed on the current collector. The negative active material layer may include a negative active material.

The negative active material may include a material that reversibly intercalates/deintercalates lithium ions, a lithium metal, lithium metal alloy, a material being capable of doping and dedoping lithium, or a transition metal oxide.

The material that reversibly intercalates/deintercalates lithium ions includes carbon materials which are any generally-used carbon-based negative active material in a lithium ion rechargeable battery. Examples of the carbon-based negative active material include crystalline carbon, amorphous carbon or a mixture thereof. The crystalline carbon may be non-shaped, or sheet, flake, spherical, or fiber shaped natural graphite or artificial graphite. The amorphous carbon may be a soft carbon (low temperature fired carbon), a hard carbon, a mesophase pitch carbonized product, fired coke, and the like.

The lithium metal alloy include lithium and a metal of Na, K, Rb, Cs, Fr, Be, Mg, Ca, Sr, Si, Sb, Pb, In, Zn, Ba, Ra, Ge, Al, or Sn.

The material being capable of doping and dedoping lithium may include Si, $SiO_x$ ($0 < x < 2$), a Si-Q alloy (wherein Q is an alkali metal, an alkaline-earth metal, group 13 to 16 elements, a transition element, a rare earth element, or a combination thereof, and not Si), Sn, $SnO_2$, a Sn-R alloy (wherein R is an alkali metal, an alkaline-earth metal, a group 13 to 16 element, a transition element, a rare earth element, or a combination thereof, excluding Sn), and the like. At least one of these materials may be mixed with $SiO_2$. The elements Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include vanadium oxide, lithium vanadium oxide, and the like.

The negative active material layer may include a binder, and optionally a conductive material.

The binder improves binding properties of negative active material particles with one another and with a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of the negative electrode. Any electrically conductive material can be used as a conductive agent, unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, or the like; a conductive polymer such as a polyphenylene derivative, and the like; or a combination thereof.

The current collector includes a copper foil, a nickel foil, a stainless steel foil, a titanium foil, a nickel foam, a copper foam, a polymer substrate coated with a conductive metal, or combinations thereof.

The negative and positive electrodes may be fabricated in a method of preparing an active material composition by mixing the active material, a conductive material, and a binder and coating the composition on a current collector. The electrode manufacturing method is well known and thus, is not described in detail in the present specification. The solvent includes N-methylpyrrolidone and the like but is not limited thereto.

The electrolyte may include a non-aqueous organic solvent and a lithium salt.

The non-aqueous organic solvent plays a role of transmitting ions taking part in the electrochemical reaction of a battery.

The non-aqueous organic solvent may include a carbonate-based, ester-based, ether-based, ketone-based, alcohol-based, or an aprotic solvent. The carbonate-based solvent may include dimethyl carbonate (DMC), diethyl

carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, and may include a double bond, an aromatic ring, or an ether bond), amides such as dimethylformamide, dimethylacetamide, dioxolanes such as 1,3-dioxolane, sulfolanes, and the like.

The electrolyte may further include a fluoro-substituted ether-based organic solvent, a fluoro-substituted carbonate-based organic solvent, or a combination thereof. In particular, the electrolyte may include 5 to 50 volume% of the fluoro-substituted ether-based organic solvent, fluoro-substituted carbonate-based organic solvent, and a combination thereof based on the total amount of the electrolyte.

The non-aqueous organic solvent may be used singularly or in a mixture. When the organic solvent is used in a mixture, its mixture ratio can be controlled in accordance with desirable performance of a battery.

The carbonate-based solvent may include a mixture of a cyclic carbonate and a linear carbonate. The cyclic carbonate and the linear carbonate are mixed together in a volume ratio of about 1 : 1 to about 1 : 9 as an electrolyte. Within the numeral range, the electrolyte may have enhanced performance.

For example, the cyclic carbonate and linear carbonate may be mixed together in a volume ratio of about 2:8 to about 3:7, and thereby the electrolyte being prepared may give high performance.

The non-aqueous organic solvent may further include an aromatic hydrocarbon-based organic solvent along with the carbonate-based solvent. The aromatic hydrocarbon-based organic solvent and carbonate-based organic solvent may be used in a weight ratio of about 0.5:95.5 to 3:97.

The aromatic hydrocarbon-based organic solvent may be an aromatic hydrocarbon-based compound represented by the following Chemical Formula 3.

[Chemical Formula 3]

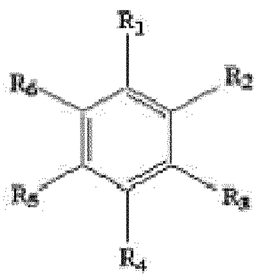

(wherein, in the above Chemical Formula, $R_1$ to $R_6$ are independently selected from hydrogen, halogen, C1 to C10 alkyl group, C1 to C10 haloalkyl group and mixtures thereof)

The aromatic hydrocarbon-based organic solvent may be benzene, flourobenzene, 1,2-difluorobenzene, 1,3-difluorobenzene, 1,4- difluorobenzene, 1,2,3-trifluorobenzene, 1,2,4-trifluorobenzene, cholorobenzene, 1,2-di cholorobenzene, 1,3-cholorobenzene, 1,4-cholorobenzene, 1,2,3-tricholorobenzene, 1,2,4-tricholorobenzene, iodobenzene, 1,2-idiodobenzene, 1,3-iodobenzene, 1,4-iodobenzene, 1,2,3-triiodobenzene, 1,2,4- triiodobenzene, toluene, flourotoluene, 1,2-diflourotoluene, 1,3-diflourotoluene, 1,4-diflourotoluene, 1,2,3-triflourotoluene, 1,2,4-triflourotoluene, chlorotoluene, 1,2-dichlorotoluene, 1,3-dichlorotoluene, 1,4-dichlorotoluene, 1,2,3-tri chlorotoluene, 1,2,4-trichlorotoluene, iodotoluene, 1,2-diiodotoluene, 1,3-diiodotoluene, 1,4-diiodotoluene, 1,2,3-tiriodotoluene, 1,2,4-triiodotoluene, xylene, or mixtures thereof.

The lithium salt is dissolved in the non-aqueous solvent and supplies lithium ions in the rechargeable lithium battery, and basically operates the rechargeable lithium battery and improves lithium ion migration between the positive and negative electrodes. Representative examples of lithium salts include $LiPF_6$, $LiBF_4$, $LiBF_6$, $LiSbF_6$, $LiAsF_6$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), LiCl, LiI, $LiB(C_2O_4)_2$ (lithium bis(oxalato) borate, LiBOB), and a combination thereof. The lithium salt may have a concentration of 0.1 to 2.0 M. When the lithium salt is included within the above concentration range, the electrolyte may have appropriate conductivity and viscosity to provide excellent electrolyte performance and excellent lithium ion mobility.

The rechargeable lithium battery may further include a separator between the negative electrode and the

positive electrode depending on the kind of rechargeable lithium battery. The separator may be formed of polyethylene, polypropylene, polyvinylidene fluoride or multi-layers thereof such as a polyethylene/polypropylene double-layered separator, a polyethylene/polypropylene/polyethylene triple-layered separator, and a polypropylene/polyethylene/polypropylene triple-layered separator. The separator may be a separator coated with a ceramic layer such as $Al_2O_3$, and the like.

The following examples illustrate the present invention in more detail. These examples, however, should not in any sense be interpreted as limiting the scope of the present invention.

**Preparation Example 1**

**(Preparation of positive active material)**

$LiNi_{0.8}Co_{0.1}Mn_{0.1}O_2$ having an average particle diameter (D50) of 13.7 μm and lithium iron phosphate having an average particle diameter of 1 μm were prepared, and the prepared $LiNi_{0.8}Co_{0.1}Mn_{0.1}O_2$ and lithium iron phosphate were introduced into mechanofusion apparatus in 900 g and 100 g, respectively, to provide 90 wt% of core and 10 wt% of shell based on 100 wt% of the positive active material. Thereafter, it was rotated at 10,000 rpm for 60 minutes to coat the lithium iron phosphate on the surface of $LiNi_{0.8}Co_{0.1}Mn_{0.1}O_2$.

Due to the granularity difference between the lithium composite oxide for the core and the lithium iron phosphate for the shell, the particulate of lithium iron phosphate was coated on the surface of core during the high-speed rotation. Thereby, a positive active material including the shell having a thickness of 1 μm was obtained.

**Preparation Example 2**

A positive active material having a core-shell structure was prepared in accordance with the same procedure as in Preparation Example 1, except that using $LiNi_{0.8}Co_{0.15}Alo_{0.05}O_2$ having an average particle diameter of 7 μm.

**Preparation Example 3**

A positive active material having a core-shell structure was prepared in accordance with the same procedure as in Preparation Example 1, except that using $LiNi_{0.5}Co_{0.2}Mn_{0.3}O_2$ having an average particle diameter of 10 μm.

**Preparation Example 4**

A positive active material having a core-shell structure was prepared in accordance with the same procedure as in Preparation Example 1, except that $LiNi_{0.5}Co_{0.2}Mn_{0.3}O_2$ having an average particle diameter of 10 μm is used as a core and coated with lithium iron phosphate to provide a positive active material having a core and a shell with 95 wt% and 5 wt%, respectively, based on 100 wt% of positive active material.

**Preparation Example5**

$LiNi_{0.5}Co_{0.2}Mn_{0.3}O_2$ having an average particle diameter of 10 μm, lithium iron phosphate having an average particle diameter of 1 μm, and denka black having an average particle diameter of 40 nm were prepared.

Based on the total amount of the positive active material, 89 wt% of $LiNi_{0.5}Co_{0.2}Mn_{0.3}O_2$, 10 wt% of lithium iron phosphate, and 1 wt% of denka black were introduced in a mechanofusion apparatus and rotated at 10,000 rpm for 60 minutes to coat lithium iron phosphate and denka black on the surface of $LiNi_{0.5}Co_{0.2}Mn_{0.3}O_2$.

**Preparation Example 6**

$LiNi_{0.5}Co_{0.2}Mn_{0.3}O_2$ having an average particle diameter of 10 μm, lithium iron phosphate having an average particle diameter of 1 μm, and denka black having an average a particle diameter of 40 nm are prepared.

Based on the total amount of the positive active material, 87 wt% of $LiNi_{0.5}Co_{0.2}Mn_{0.3}O_2$, 10 wt% of lithium iron phosphate, and 3 wt% of denka black were introduced into a mechanofusion apparatus and rotated at 10,000 rpm for 60 minutes to coat the surface of $LiNi_{0.5}Co_{0.2}Mn_{0.3}O_2$ with lithium iron phosphate and denka black.

**Preparation Example 7**

$LiNi_{0.5}Co_{0.2}Mn_{0.3}O_2$ having an average particle diameter of 10 μm, lithium iron phosphate having an average particle diameter of 1 μm, and denka black having an average a particle diameter of 40 nm were prepared.

Based on the total amount of the positive active material, 85 wt% of $LiNi_{0.5}Co_{0.2}Mn_{0.3}O_2$, 10 wt% of lithium iron

phosphate, and 5 wt% of denka black were introduced into a mechanofusion apparatus and rotated at 10,000 rpm for 60 minutes to coat the surface of $LiNi_{0.5}Co_{0.2}Mn_{0.3}O_2$ with lithium iron phosphate and denka black.

**Preparation Example 8**

$LiNi_{0.5}Co_{0.2}Mn_{0.3}O_2$ having an average particle diameter of 10 μm and lithium iron phosphate having an average particle diameter of 1 μm were prepared.

Based on the total amount of the positive active material, 85 wt% of $LiNi_{0.5}Co_{0.2}Mn_{0.3}O_2$ and 15 wt% of lithium iron phosphate were introduced into a mechanofusion apparatus and rotated at 10,000 rpm for 60 minutes to coat the surface of $LiNi_{0.5}Co_{0.2}Mn_{0.3}O_2$ with lithium iron phosphate.

**Preparation Example 9**

0.1 $Li_2MnO_3 \cdot 0.9LiNi_{0.4}Co_{0.2}Mn_{0.4}O_2$ having an average particle diameter of 11.8 μm and lithium iron phosphate having an average particle diameter of 1 μm, were prepared.

Based on the total amount of the positive active material, 90 wt% of 0.1 $Li_2MnO_3 \cdot 0.9LiNi_{0.4}Co_{0.2}Mn_{0.4}O_2$ and 10 wt% of lithium iron phosphate were introduced into a mechanofusion apparatus and rotated at 10,000 rpm for 60 minutes to coat the surface of 0.1 $Li_2MnO_3 \cdot 0.9LiNi_{0.4}Co_{0.2}Mn_{0.4}O_2$ with lithium iron phosphate.

**Preparation Example 10**

0.1 $Li_2MnO_3 \cdot 0.9LiNi_{0.4}Co_{0.2}Mn_{.4}O_2$ having an average particle diameter of 11.8 μm and lithium iron phosphate having an average particle diameter of 1 mm, were prepared.

Based on the total amount of the positive active material, 85 wt% of 0.1 $Li_2MnO_3 \cdot 0.9LiNi_{0.4}Co_{0.2}Mn_{0.4}O_2$ and 15 wt% of lithium iron phosphate were introduced into a mechanofusion apparatus and rotated at 10,000 rpm for 60 minutes to coat the surface of 0.1 $Li_2MnO_3 \cdot 0.9LiNi_{0.4}Co_{0.2}Mn_{0.4}O_2$ with lithium iron phosphate.

**Comparative Preparation Example 1**

$LiNi_{0.5}Co_{0.2}Mn_{0.3}O_2$ without a coating treatment on its surface was used for a positive active material. The positive active material had an average particle diameter of 10 μm.

**Comparative Preparation Example 2**

A positive active material was prepared in accordance with the same procedure as in Comparative Example 1, except that providing a core and a shell in 98 wt% and 2 wt%, respectively, based on 100 wt% of positive active material.

**Comparative Preparation Example 3**

A positive active material was prepared in accordance with the same procedure as in Comparative Example 1, except that providing a core and a shell in 83 wt% and 17 wt%, respectively, based on 100 wt% of positive active material.

**Comparative Preparation Example 4**

As a positive active material, $LiNi_{0.8}Co_{0.1}Mn_{0.1}O_2$ having an average particle diameter of 13.7 μm was prepared without a coating treatment.

**Comparative Preparation Example 5**

As a positive active material, $LiNi_{0.8}Co_{0.15}Al_{0.05}O_2$ having an average particle diameter of 7 μm was prepared without a coating treatment.

**Comparative Preparation Example 6**

As a positive active material, 0.1 $Li_2MnO_3 \cdot 0.9LiNi_{0.4}Co_{0.2}Mn_{0.4}O_2$ having an average particle diameter of 11.8 μm was prepared without a coating treatment.

**Comparative Preparation Example 7**

0.1 $Li_2MnO_3 \cdot 0.9LiNi_{0.4}Co_{0.2}Mn_{0.4}O_2$ having an average particle diameter of 11.8 μm and lithium iron phosphate having an average particle diameter of 1 μm, were prepared.

Based on the total amount of the positive active material, 98 wt% of 0.1 $Li_2MnO_3 \cdot 0.9LiNi_{0.4}Co_{0.2}Mn_{0.4}O_2$ and 2 wt% of lithium iron phosphate were introduced into a mechanofusion apparatus and rotated at 10,000 rpm for 60 minutes to coat the surface of 0.1 $Li_2MnO_3 \cdot 0.9LiNi_{0.4}Co_{0.2}Mn_{0.4}O_2$ with lithium iron phosphate.

The following Table 1 shows a composition and an average particle diameter of positive active materials prepared from Preparation Examples 1 to 10 and Comparative Examples 1 to 7.

[Table 1]

| | Core | | Shell (wt%) | | D50 (μm) | | |
|---|---|---|---|---|---|---|---|
| | Composition | wt% | Lithium iron phosphate | Carbon | Core | Shell | Carbon-based material |
| Preparation Example 1 | $LiNi_{0.8}Co_{0.1}Mn_{0.1}O_2$ | 90 | 10 | | 13.7 | 1 | - |
| Preparation Example 2 | $LiNi_{0.8}Co_{0.15}Al_{0.05}O_5$ | 90 | 10 | - | 7 | 1 | - |
| Preparation Example 3 | $LiNi_{0.5}Co_{0.2}Mn_{0.3}O_2$ | 90 | 10 | - | 10 | 1 | - |
| Preparation Example 4 | $LiNi_{0.5}Co_{0.2}Mn_{0.3}O_2$ | 95 | 5 | - | 10 | 1 | - |
| Preparation Example 5 | $LiNi_{0.5}Co_{0.2}Mn_{0.3}O_2$ | 89 | 10 | 1 | 10 | 1 | 0.04 |
| Preparation Example 6 | $LiNi_{0.5}Co_{0.2}Mn_{0.3}O_2$ | 87 | 10 | 3 | 10 | 1 | 0.04 |
| Preparation Example 7 | $LiNi_{0.5}Co_{0.2}Mn_{0.3}O_2$ | 85 | 10 | 5 | 10 | 1 | 0.04 |
| Preparation Example 8 | $LiNi_{0.5}Co_{0.2}Mn_{0.3}O_2$ | 85 | 15 | - | 10 | 1 | - |
| Preparation Example 9 | 0.1 $Li_2MnO_3 \cdot 0.9LiNi_{0.4}Co_{0.2}Mn_{0.4}O_2$ | 90 | 10 | - | 11.8 | 1 | - |
| Preparation Example 10 | 0.1 $Li_2MnO_3 \cdot 0.9LiNi_{0.4}Co_{0.2}Mn_{0.4}O_2$ | 85 | 15 | - | 11.8 | 1 | - |
| Comparative Preparation Example1 | $LiNi_{0.5}Co_{0.2}Mn_{0.3}O_2$ | 100 | - | - | 10 | - | - |
| Comparative Preparation Example 2 | $LiNi_{0.5}Co_{0.2}Mn_{0.3}O_2$ | 98 | 2 | - | 10 | - | - |
| Comparative Preparation Example 3 | $LiNi_{0.5}Co_{0.2}Mn_{0.3}O_2$ | 83 | 17 | - | 10 | - | - |
| Comparative Preparation Example 4 | $LiNi_{0.8}Co_{0.1}Mn_{0.1}O_2$ | 100 | - | - | 13.7 | - | - |

(continued)

| | Core | | Shell (wt%) | | D50 (μm) | | |
|---|---|---|---|---|---|---|---|
| | Composition | wt% | Lithium iron phosphate | Carbon | Core | Shell | Carbon-based material |
| Comparative Preparation Example 5 | $LiNi_{0.5}Co_{0.15}Al_{0.05}O_2$ | 100 | - | - | 7 | - | - |
| Comparative Preparation Example 6 | $0.1 Li_2MnO_3 \cdot 0.9LiNi_{0.4}Co_{0.2}Mn_{0.4}O_2$ | 100 | - | - | 11.8 | - | - |
| Comparative Preparation Example 7 | $0.1 Li_2MnO_3 \cdot 0.9LiNi_{0.4}Co_{0.2}Mn_{0.4}O_2$ | 98 | 2 | - | 11.8 | 1 | - |

**SEM images of positive active materials**

FIG. 3 is a SEM image of positive active material prepared in Preparation Example 3. The coating process was performed using a mechanofusion in a high-speed dry mixing method.As shown in FIG. 3, first particles of lithium metal composite oxide were agglomerated to provide second particles and thereby, protruded and recessed portions were properly formed and the lithium iron phosphate may be coated between such protruded and recessed portions. Preparation Examples 1 to 10 provided positive active materials coated with lithium iron phosphate by adjusting the particle size and the content ratio of lithium composite metal oxide and lithium iron phosphate in the core.

**Examples 1 to 10 and Comparative Examples 1 to 7**

**(Fabrication of rechargeable lithium battery cell)**

Each positive active material obtained from Preparation Examples 1 to 10 and Comparative Preparation Examples 1 to 7, a conductive material of Denka black, and a binder of PVDF were prepared, and the positive active material, the Denka black and the binder were mixed in a solvent of N-methyl pyrrolidone at a weight ratio of 92:4:4 to provide a positive electrode slurry. The slurry was coated on an Al foil and dried and compressed in a thickness of 131 μm to provide a positive electrode. In addition, a negative active material of artificial graphite, a binder of styrene butadiene rubber (SBR), and a thickener of carboxylmethyl cellulose (CMC) were mixed at a weight ratio of 98:1:1 to provide a negative electrode slurry and coated on an Cu foil and dried and compressed to provide a negative electrode.

A polypropylene/polyethylene/polypropylene separator was placed between the positive electrode and the negative electrode, which were wound together to fabricate a rechargeable lithium battery cell. An electrolyte was prepared by mixing 1.3M of $LiPF_6$ and a mixed organic solvent of ethylene carbonate (EC), ethylmethyl carbonate (EMC), and dimethyl carbonate(DC) at a volume ratio of 3:4:3.

**Electrochemical characteristic and thermal stability**

The rechargeable lithium battery cells obtained from Examples 1 to 10 and Comparative Examples 1 to 7 were measured for a capacity retention when allowed to stand at a high temperature of 60°C and a capacity retention at 45°C after 300 cycles.

**(1) Evaluation of capacity retention (%) after allowed to stand at high temperature (60°C)**

The battery cells obtained from Examples 1 to 10 and Comparative Examples 1 to 7 were charged until 4.2V at SOC (state of charge) of 100% and allowed to stand at a high temperature chamber of 60°C for 30 days, and then discharged at 0.2C current density until 2.8V and CC-CV charged at 0.5C current density until 4.2V and discharged at 0.2C current density until 2.8V to determine a discharge capacity. It was then allowed to stand at a high temperature (60°C) for 30 days to determine a capacity retention according to Equation 1.

Equation 1:

$$\text{Capacity retention after being allowed to stand at high temperature (\%)} = (\text{discharge capacity after being allowed to stand at high temperature/initial discharge capacity}) \times 100$$

**(2) Capacity retention (%) after 300 cycles at 45 °C**

The battery cell was introduced into a thermostat chamber of 45°C and charged and discharged for 300 cycles at 2.8V-4.2V voltage range under 1C/1C current condition, and then CC-CV charged until 4.2V at 1C current density and discharged until 2.8V at 0.2C current density to determine a discharge capacity. Then the capacity retention was evaluated according to Equation 2.

Equation 2:

$$\text{Capacity retention after 300 cycles (\%)} = (300^{th} \text{ discharge capacity/initial discharge capacity}) \times 100$$

**(3) Thermal stability evaluation 1: DSC**

About 2 g of each positive active material obtained from Preparation Examples 1 to 10 and Comparative Preparation Examples 1 to 7 were measured for the calorie change using a differential scanning calorimetry (DSC: differential scanning calorimetry) equipment (Q2000 from TA instruments). First, the battery cells obtained from Preparation Examples 1 to 10 and Comparative Preparation Examples 1 to 7 were charged at 100% at 0.2C until 4.2V, and the battery cells were disassembled. The positive electrode plate was cleaned by DMC (dimethyl carbonate), and the positive electrode was sampled in the same size to measure the positive electrode's weight. The positive electrode was introduced into the electrolyte solution in a weight ratio of 1:0.87, and the DSC was evaluated. The calorie change was monitored from 50°C, which is a starting point, to 400°C, and the calculated exothermic heat (the value that exothermal curved line in DSC is integrated by temperature), the on-set temperature, and the exothermic temperature were shown in the following Table 2.

The test results are shown in the following Table 2.

[Table 2]

| | 300 cycle capacity retention (%) | Capacity retention after being allowed to stand at high temperature (60 °C) (%) | DSC | | |
|---|---|---|---|---|---|
| | | | Exothermic heat (J/g) | On-set temperature (°C) | Peak temperature (°C) |
| Preparation Example1 | 63% | 89% | 987 | 242 | 269 |
| Preparation Example2 | 72% | 91% | 992 | 189 | 315 |
| Preparation Example3 | 91% | 91% | 957 | 332 | 339 |
| Preparation Example 4 | 95% | 94% | 1110 | 247 | 271 |
| Preparation Example 5 | 97% | 98% | 652 | 239 | 258 |

(continued)

| | 300 cycle capacity retention (%) | Capacity retention after being allowed to stand at high temperature (60 °C) (%) | DSC | | |
|---|---|---|---|---|---|
| | | | Exothermic heat (J/g) | On-set temperature (°C) | Peak temperature (°C) |
| Preparation Example 6 | 98% | 97% | 203 | 258 | 278 |
| Preparation Example 7 | 93% | 90% | 460 | 256 | 278 |
| Preparation Example 8 | 93% | 91% | 1005 | 262 | 280 |
| Preparation Example 9 | 95% | 92% | 642 | 252 | 263 |
| Preparation Example 10 | 92% | 91% | 983 | 240 | 250 |
| Comparative Preparation Example 1 | 89% | 90% | 1323 | 298 | 307 |
| Comparative Preparation Example 2 | 90% | 91% | 1257 | 298 | 312 |
| Comparative Preparation Example 3 | 92% | 89% | 1111 | 252 | 266 |
| Comparative Preparation Example 4 | 55% | 84% | 1630 | 220 | 238 |
| Comparative Preparation Example 5 | 65% | 90% | 1520 | 241 | 250 |
| Comparative Preparation Example 6 | 90% | 91% | 1136 | 236 | 248 |
| Comparative Preparation Example 7 | 90% | 90% | 1102 | 234 | 247 |

As shown in Table 2, Preparation Examples 1 to 10 coated with shell including lithium iron phosphate had remarkably low exothermic heat compared to Comparative Preparation Examples 1 to 7. Particularly, Preparation Examples 3 to 8 had exothermic heat of 957 J/g, 1110 J/g, 652 J/g, 203 J/g, 460 J/g and 1005 J/g, respectively, which were remarkably lower than Comparative Preparation Examples 1 to 3 using the same lithium composite metal (i.e., $LiNi_{0.5}Co_{0.2}Mn_{0.3}O_2$) as a core. It means that the reaction between the electrolyte solution and the lithium composite metal oxide was suppressed by lithium iron phosphate coating the cores of Examples 3 to 8, and thereby the thermal stability of lithium rechargeable battery cell was improved. However, in Comparative Examples 2 and 3 including lithium iron phosphate as a shell in 2 wt% and 17 wt%, respectively, based on the total amount of positive active material, there was little enhancement of the exothermic heat in comparison with Comparative Example 1. In addition, Examples 9 and 10, which, respectively, used $0.1Li_2MnO_3 \cdot 0.9LiNi_{0.4}Co_{0.2}Mn_{0.4}O_2$ as core component coated with 10wt% and 15wt% lithium iron phosphate, respectively, turned out to show much lower exothermic heat (642 J/g, 983 J/g) compared to Comparative Example 7, which used the same core component but only 2 wt% of lithium iron phosphate.

Likewise, Examples 1 and 2 including excessive Ni had remarkably low exothermic heat compared to Comparative Examples 4 and 5. It means that the thermal stability may be improved by coating the positive active material including an excess amount of Ni with lithium iron phosphate.

In addition, the positive active material of Examples 3 to 8 coated with the shell including lithium iron phosphate had superior or similar 300 cycle capacity retention and capacity retention after being allowed to stand at a high temperature compared to Comparative Examples 1 to 3; and Examples 1 and 2 also showed improved results for 300 cycle capacity retention and the capacity retention after being allowed to stand at a high temperature compared to Comparative Examples 4 and 5.

FIG. 4 to FIG. 6 show the results of the DSC analysis.

As shown in FIG. 4 to FIG. 6, Preparation Examples 1 to 3 had remarkably lower exothermic heat than Comparative Preparation Examples 4, 5 and Comparative Preparation Example 1, respectively. From the results, it is understood that the positive active material having a core-shell structure had an excellent thermal stability.

In addition, as can be understood from FIGS. 7 and 8, Comparative Preparation Example 1 had a high peak at around 310 °C; Preparation Examples 4 to 7 had a lower peak of positive electrode decomposition and a broad peak at a higher temperature. From these results, it is confirmed that the exothermic heat was remarkably decreased and the thermal stability was further improved when lithium iron phosphate was coated on the surface of lithium metal composite oxide together with a conductive material of carbon-based material.

**(4) Thermal stability evaluation 2: Runaway reaction measurement**

The battery cells obtained from Example 3 and Comparative Example 1 (18650 size, 1.3 Ah) were charged at 4.2V SOC 100%, and changes in the cell temperature were monitored using ARC (accelerating rate calorimeter) while adiabatically heating the cell. Conditions for the ARC evaluation are shown in the following Table 3.

[Table 3]

| Setting parameter | Predetermined value |
|---|---|
| Start temperature | 60°C |
| End temperature | 450°C |
| Slope sensitivity | 0.02°C/min |
| Heat step temperature | 5 °C |
| Stabilization time after rising of temperature (Wait time) | 15 min |
| Data step temperature | 1 °C |
| Data step time | 0.5 min |
| Calculation step temperature | 0.2 °C |

The ARC evaluation results are shown in the following Table 4, and FIG. 9 to FIG. 11 illustrates the curves showing the temperature change over time.

As shown in the following Table 4, in Example 1 when lithium iron phosphate was coated on the surface, the self heating rate was reduced to the half. Moreover, the exothermic time that elapsed until the thermal runaway occurred was twice longer than Comparative Example 1. In addition, the substantially generated exothermic heat (heat of reaction, J/g) was also low.

[Table 4]

| | Example3 | Comparative Example1 |
|---|---|---|
| cell weight (g) | 33.43 | 33.31 |
| Initial voltage (V) | 4.18 | 4.18 |
| Heat capacity (J/gK) | 0.951 | 0.945 |
| On-set temperature (To °C) | 115.30 | 135.28 |
| Self heat rate at To (°C/min) | 0.020 | 0.044 |
| Final adiabatic temperature (°C) | 468.40 | 581.54 |

(continued)

| | Example3 | Comparative Example1 |
|---|---|---|
| Adiabatic Temperature rise(°C) | 353.10 | 446.26 |
| Exothermic heat (J/g) (Heat of reaction) | 335.8 | 421.7 |
| Start time of thermal runaway (min) (Exothermic time) | 1192.17 | 459.87 |

FIG. 9 and FIG. 10 show the results of heat abuse evaluation for the rechargeable battery cells obtained from Example 3 and Comparative Example 1, respectively. Comparative Example 1 delayed the temperature increasing time compared to Example 3. As ARC evaluation for the electrode materials of Example 3 and Comparative Example 1, FIG. 11 shows a graph measuring adiabatically heat-wait-seek comparison, and it is understood that the temperature of the rechargeable lithium battery cell according to Example 3 increased more slowly, and thus it took longer for the battery to reachthe highest temperature was prolonged. Accordingly, lithium iron phosphate coated on the surface of lithium metal composite oxide suppresses the generation of thermal runaway.

<u>**(5) Thermal stability evaluation 3: Overcharge evaluation**</u>

A 1 C-rate overcharge test for the battery cells according to Examples 3, 6 and Comparative Example 1 were performed, and the exothermic temperatures thereof were measured. The results are shown in FIG. 12 to 14, respectively. Changes in a voltage and a temperature were measured respectively, with the test conditions of charging the pouch cell attached with a temperature sensor on the cell surface at 1 C-rate until 12 V. As shown in FIG. 12 and 14, the maximum exothermic temperatures of Example 3 and Example 6 were about 35°C and about 28°C, respectively; however, as shown in FIG. 14, the maximum exothermic temperature of the material of Comparative Example 1 without a coating was about 50°C, which was considerably higher. In addition, the overcharge timefor the material of Comparative Example 1 was shorter than those of Examples 3 and 6.

From the results, it is confirmed that the present invention provides an excellent thermal stability.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

**1.** Positive active material (10, 20) for a rechargeable lithium battery, the material comprising:

a core (11, 21) comprising a lithium composite metal oxide selected from the group consisting of compounds represented by the following Chemical Formula 1, Chemical Formula 2, and combinations thereof,

$$Li_xMO_2 \qquad (1)$$

wherein M is one or more metal element, and $1 \leq x \leq 1.1$,

$$y\ Li_2MnO_3 \cdot (1\text{-}y)\ LiM'O_2 \qquad (2)$$

wherein M' is one or more metal element, $0 < y < 1$; and
a shell (13, 23) covering the core (11, 21), the shell comprising lithium iron phosphate ($LiFePO_4$), wherein the shell (13, 23) is present in an amount in a range of 5 to 15 wt% based on the total weight of the positive active material.

**2.** The positive active material (10, 20) according to claim 1, wherein the shell (13, 23) is present in an amount in a range of 7 to 15 wt%, particularly in a range of 10 to 15 wt%, based on the total weight of the positive active material.

**3.** The positive active material (10, 20) according to claim 1 or 2, wherein in Chemical Formulae 1 and 2, M and M' are one or more elements independently selected from the group consisting of Ni, Co, Mn, Mg, Fe, Cu, Zn, Cr, Ag, Ca, Na, K, In, Ga, Ge, V, Mo, Nb, Si, Ti, and Zr.

**4.** The positive active material (10, 20) according to any of the preceding claims, wherein in Chemical Formulae 1 and 2, M and M' are independently a metal composite compound selected from the group consisting of $Ni_aCo_b$ ($0<a<1$, $0<b<1$, $a+b=1$), $Co_aMn_b$ ($0<a<1$, $0<b<1$, $a+b=1$), $Ni_aMn_b$ ($0<a<1$, $0<b<1$, $a+b=1$), $Ni_aCo_bMn_c$ ($0<a<1, 0<b<1, 0<c<1$, $a+b+c=1$), and $Ni_aCo_bAl_c$ ($0<a<1$, $0<b<1$, $0<c<1$, $a+b+c=1$).

**5.** The positive active material (10, 20) according to any of the preceding claims, wherein in Chemical Formulae 1 and 2, M and M' are independently $Ni_aCo_bMn_c$ ($0.3\leq a\leq 0.8$, $0.1\leq b\leq 0.5$, $0.1\leq c<=0.5$, $a+b+c=1$).

**6.** The positive active material (10, 20) according to any of the preceding claims, wherein in Chemical Formula 2, $Li_2MnO_3$ has a layered structure.

**7.** The positive active material (10, 20) according to any of the preceding claims, wherein in Chemical Formula 2, $Li_2MnO_3$ is doped with one or more element selected from the group consisting of Al, Ga, Ge, Mg, Nb, Zn, Cd, Ti, Co, Ni, K, Na, Ca, Si, Fe, Cu, Sn, V, B, P, Se, Bi, As, Zr, Mn, Cr, Sr, V, Sc, Y, and a rare earth element.

**8.** The positive active material (10, 20) according to any of the preceding claims, wherein the lithium composite metal oxide included in the core (11, 21) has an average particle diameter in the range from 6 to 20 $\mu$m, particularly in the range from 10 to 15 $\mu$m.

**9.** The positive active material (10, 20) according to any of the preceding claims, wherein the lithium iron phosphate included in the shell (13, 23) has an average particle diameter in the range from 0.2 to 1 $\mu$m, particularly in the range from 0.2 to 0.5 $\mu$m.

**10.** The positive active material (10, 20) according to any of the preceding claims, wherein the shell (13, 23) has a thickness in the range from 0.5 to 1.5 $\mu$m, particularly in the range from 0.8 to 1 $\mu$m.

**11.** The positive active material (10, 20) according to any of the preceding claims, wherein the shell (13, 23) further comprises from 0.5 to 5 wt%, particularly from 1 to 3 wt%, of a carbon-based material, based on the total weight of the positive active material.

**12.** The positive active material (10, 20) according to claim 11, wherein the carbon-based material selected from the group consisting of activated carbon, carbon black, acetylene black, vapor grown carbon fibers (VGCF), carbon nanotubes, and combinations thereof.

**13.** The positive active material (20) according to any of the preceding claims, further including an intermediate shell (22) between the core (21) and the shell (23) comprising at least one metal oxide doped on or coated on the core (21).

**14.** The positive active material (10, 20) according to claim 13, wherein the metal oxide is selected from the group consisting of $ZrO_2$, $Al_2O_3$, MgO, $TiO_2$, and a combination thereof.

**15.** A rechargeable lithium battery (1) comprising:

a positive electrode (2) comprising a positive active material (10, 20) according to one of claims 1 to 14;
a negative electrode (3) comprising a negative active material and facing the positive electrode (2); and
an electrolyte between the positive electrode (2) and the negative electrode (3).

FIG. 1A

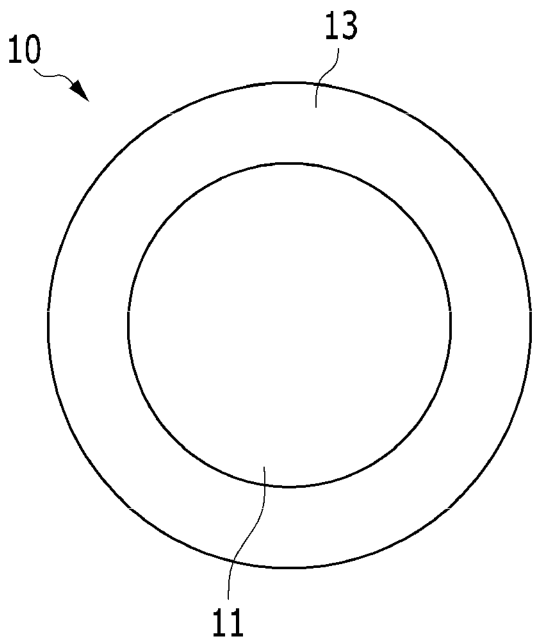

FIG. 1B

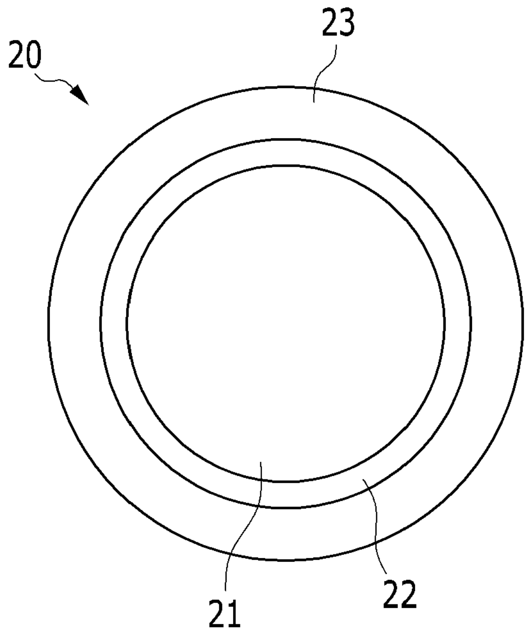

FIG. 2

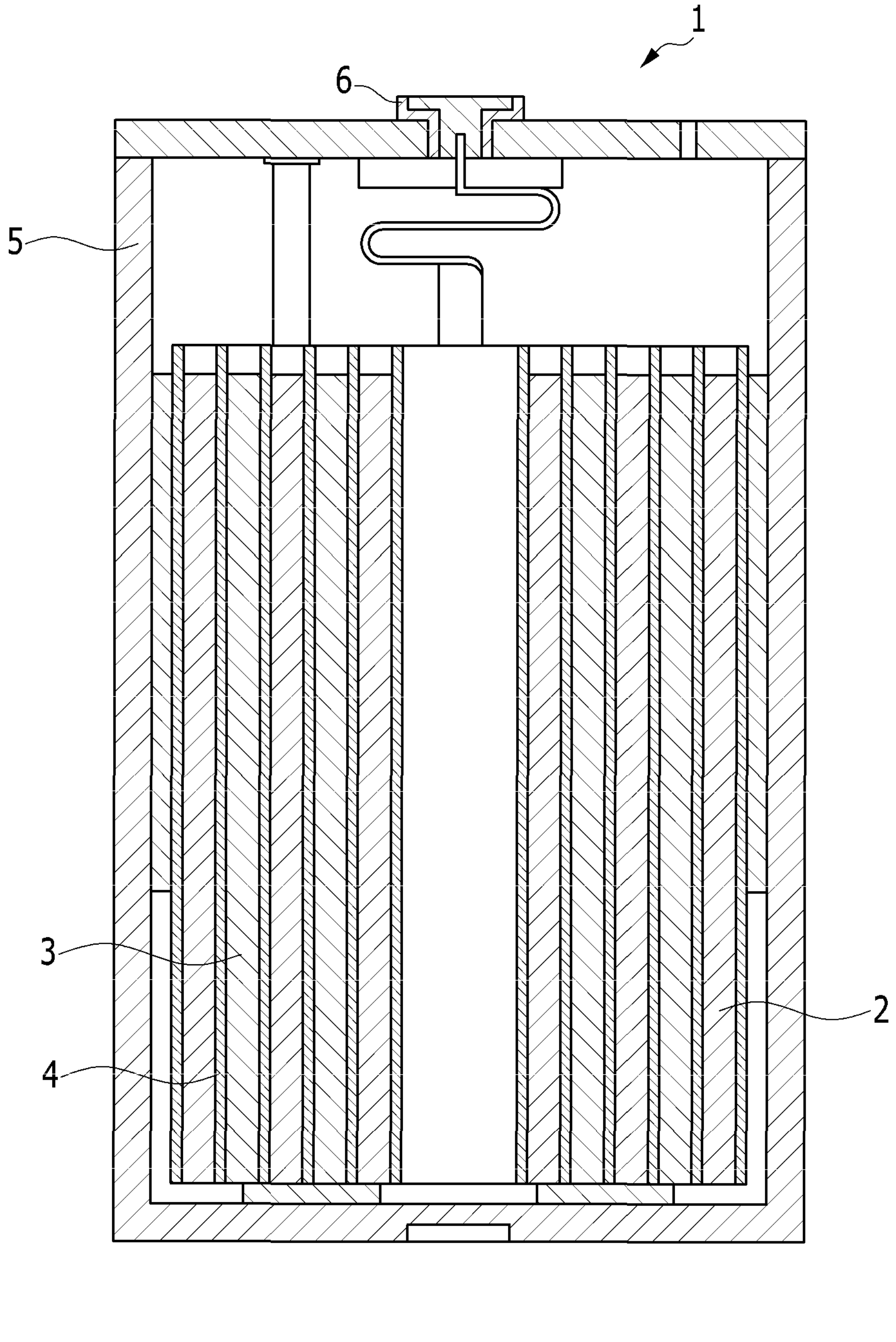

FIG. 3

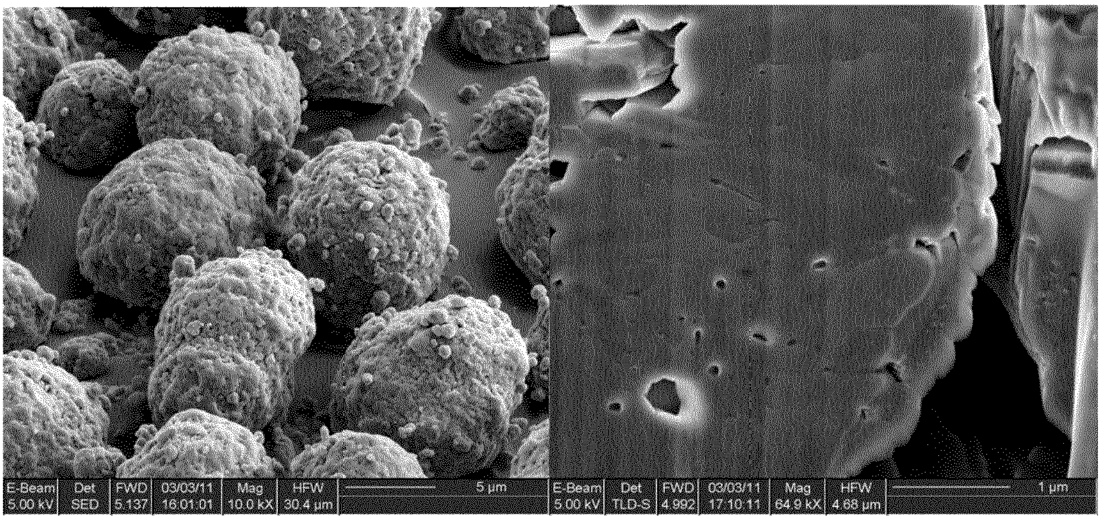
E-Beam
5.00 kV
Det
SED
FWD
5.137
03/03/11
16:01:01
Mag
10.0 kX
HFW
30.4 µm
5 µm
E-Beam
5.00 kV
Det
TLD-S
FWD
4.992
03/03/11
17:10:11
Mag
64.9 kX
HFW
4.68 µm
1 µm

FIG. 4

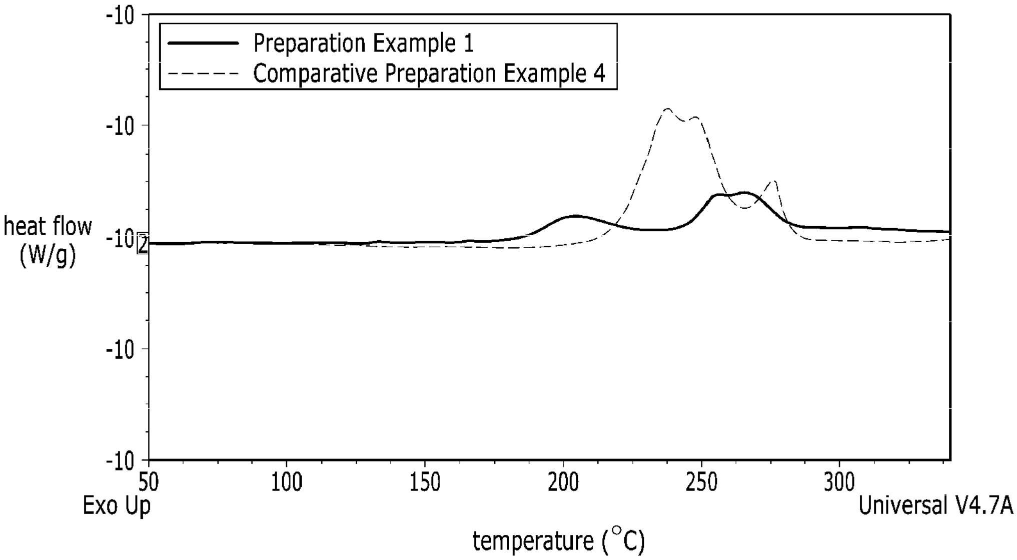
Preparation Example 1
Comparative Preparation Example 4
heat flow
(W/g)
-10
-10
-10
-10
-10
50
100
150
200
250
300
Exo Up
Universal V4.7A
temperature (°C)

FIG. 5

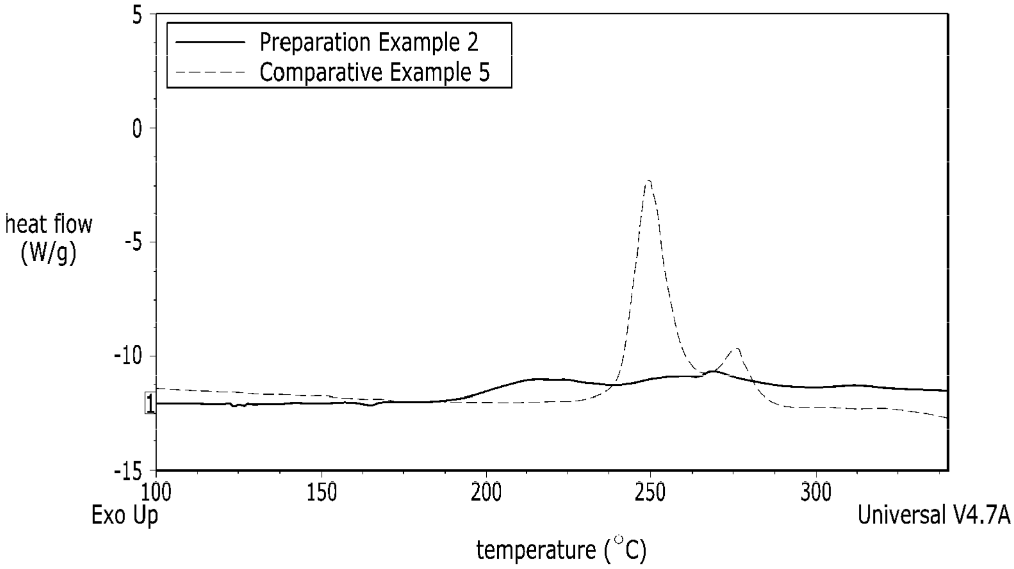
Preparation Example 2
Comparative Example 5
heat flow
(W/g)
5
0
-5
-10
-15
100
150
200
250
300
Exo Up
Universal V4.7A
temperature (°C)

FIG. 6

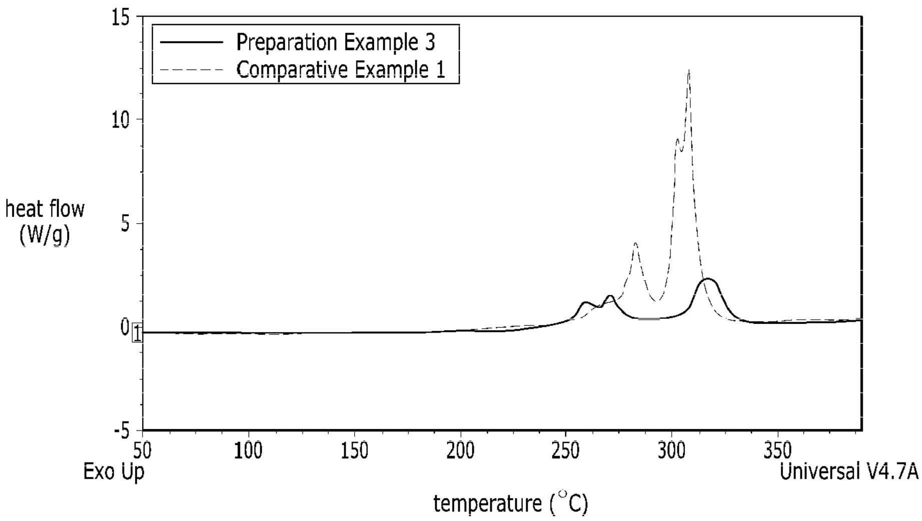
Preparation Example 3
Comparative Example 1
heat flow
(W/g)
15
10
5
0
-5
50
100
150
200
250
300
350
Exo Up
Universal V4.7A
temperature (°C)

FIG. 7

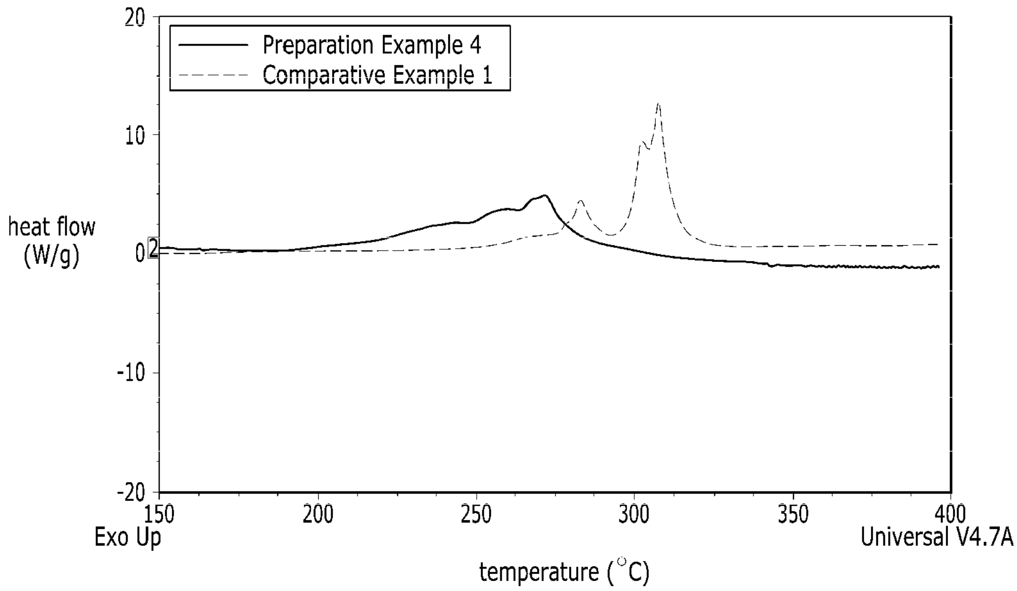
Preparation Example 4
Comparative Example 1
heat flow
(W/g)
20
10
0
-10
-20
150
200
250
300
350
400
Exo Up
Universal V4.7A
temperature (°C)

FIG. 8

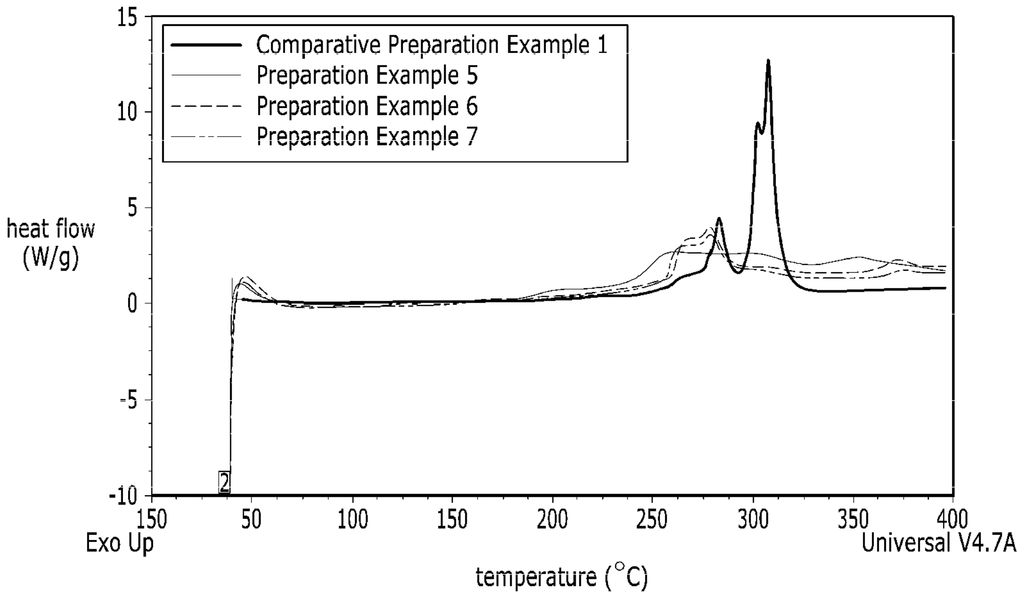
Comparative Preparation Example 1
Preparation Example 5
Preparation Example 6
Preparation Example 7
heat flow
(W/g)
15
10
5
0
-5
-10
150
50
100
150
200
250
300
350
400
Exo Up
Universal V4.7A
temperature (°C)

FIG. 9

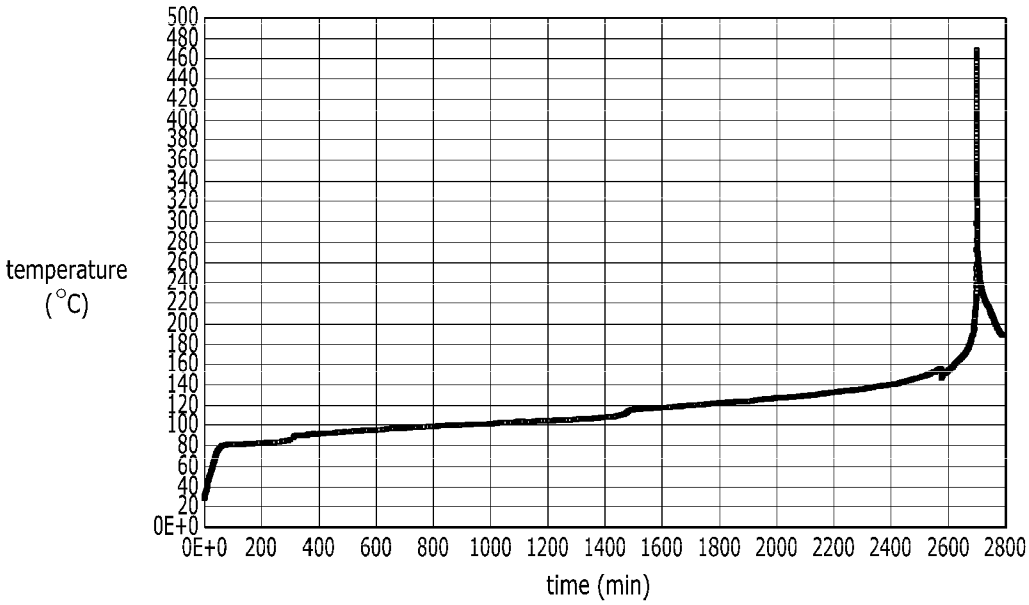
temperature
(°C)
500
480
460
440
420
400
380
360
340
320
300
280
260
240
220
200
180
160
140
120
100
80
60
40
20
0E+0
0E+0
200
400
600
800
1000
1200
1400
1600
1800
2000
2200
2400
2600
2800
time (min)

FIG. 10

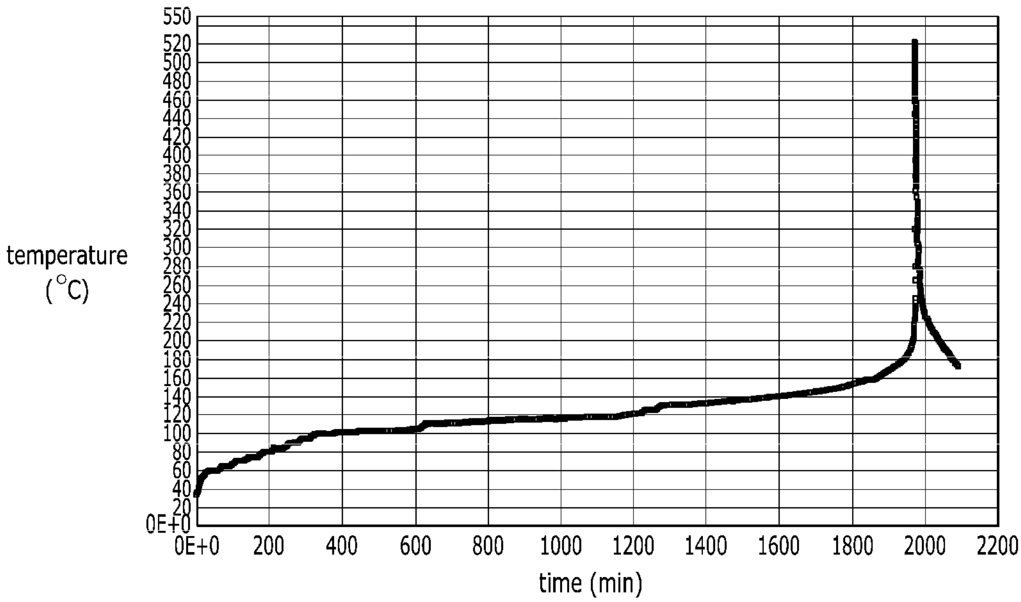
temperature
(°C)
550
520
500
480
460
440
420
400
380
360
340
320
300
280
260
240
220
200
180
160
140
120
100
80
60
40
20
0E+0
0E+0
200
400
600
800
1000
1200
1400
1600
1800
2000
2200
time (min)

FIG. 11

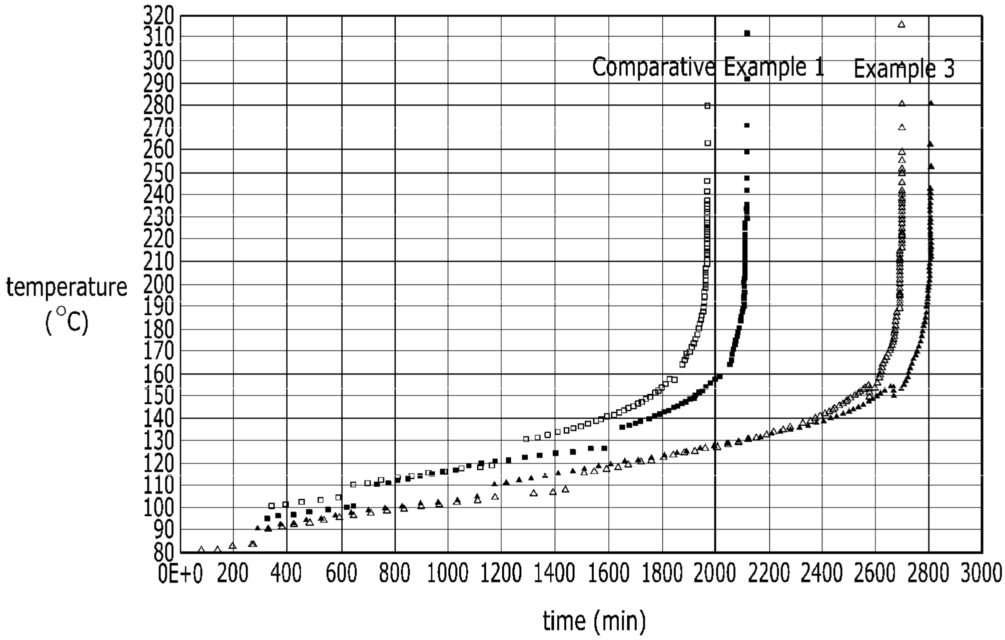
Comparative Example 1
Example 3
temperature (°C)
time (min)
320
310
300
290
280
270
260
250
240
230
220
210
200
190
180
170
160
150
140
130
120
110
100
90
80
0E+0 200 400 600 800 1000 1200 1400 1600 1800 2000 2200 2400 2600 2800 3000

FIG. 12

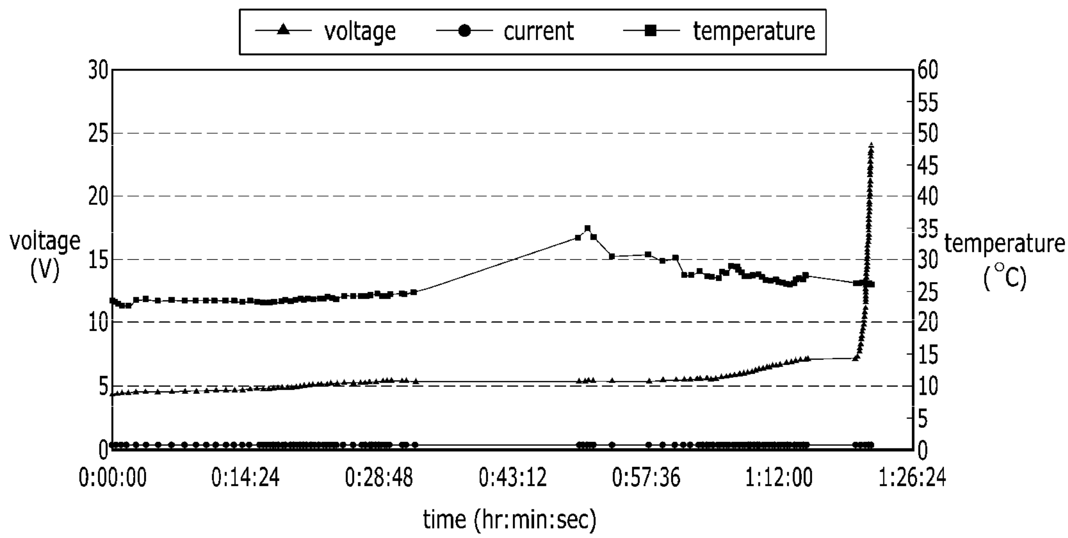
voltage
current
temperature
voltage (V)
temperature (°C)
time (hr:min:sec)
30
25
20
15
10
5
0
60
55
50
45
40
35
30
25
20
15
10
5
0
0:00:00 0:14:24 0:28:48 0:43:12 0:57:36 1:12:00 1:26:24

FIG. 13

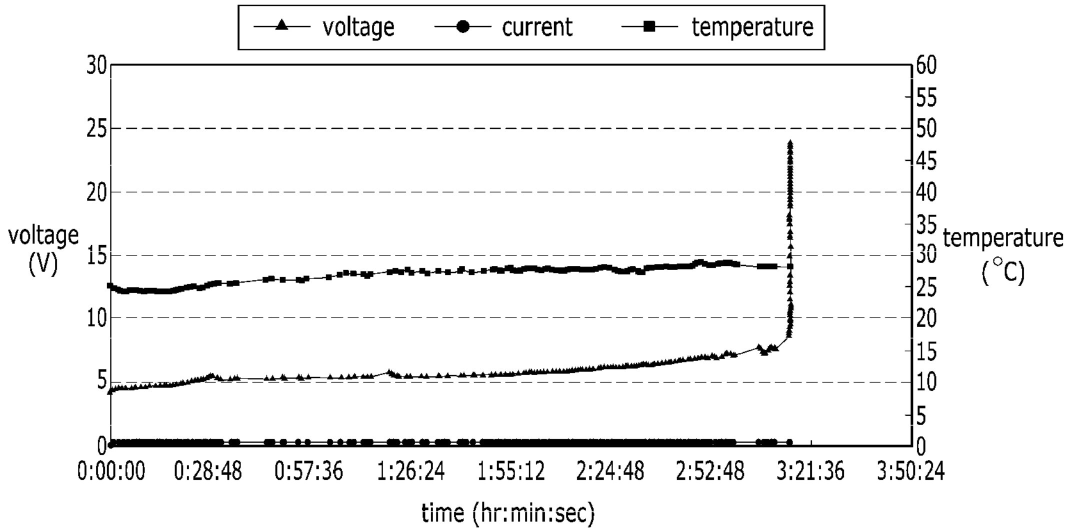
voltage
current
temperature
voltage (V)
temperature (°C)
0
5
10
15
20
25
30
0
5
10
15
20
25
30
35
40
45
50
55
60
0:00:00
0:28:48
0:57:36
1:26:24
1:55:12
2:24:48
2:52:48
3:21:36
3:50:24
time (hr:min:sec)

FIG. 14

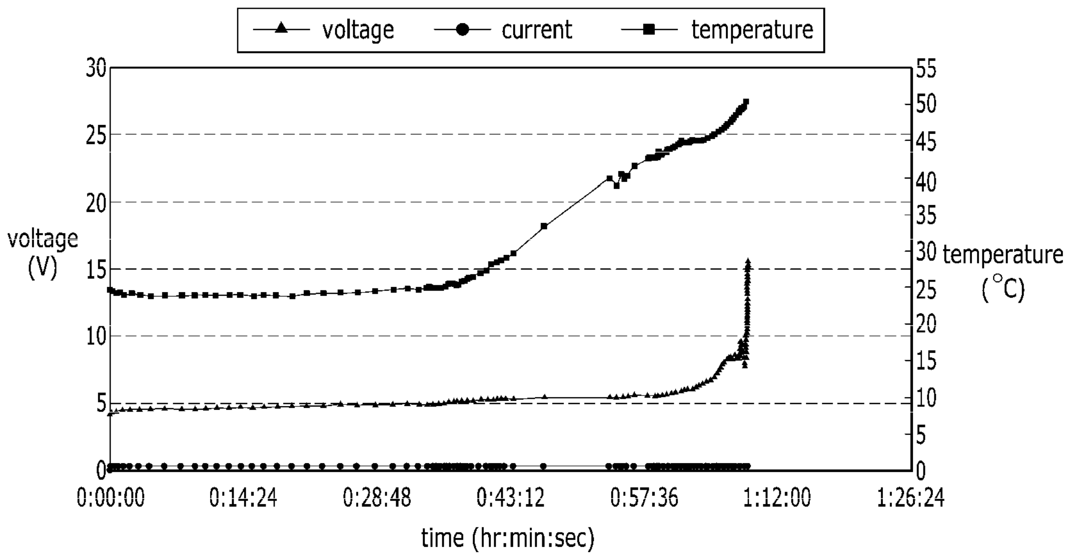
voltage
current
temperature
voltage (V)
temperature (°C)
0
5
10
15
20
25
30
0
5
10
15
20
25
30
35
40
45
50
55
0:00:00
0:14:24
0:28:48
0:43:12
0:57:36
1:12:00
1:26:24
time (hr:min:sec)